# EUROPÄISCHE PATENTANMELDUNG

(11) **EP 4 818 845 A1**
(43) Veröffentlichungstag der Anmeldung: **07.10.2026**
(21) Anmeldenummer: 25168169.8
(22) Anmeldetag: 03.04.2025
(51) Int. Cl.: G05D 7/01, F16K 17/20

(54) **DURCHFLUSSBEGRENZUNGSVENTIL SOWIE EINEN DRUCKREGLER FÜR EIN WASSERSTOFFSYSTEM**

(71) Anmelder: Robert Bosch GmbH, 70442 Stuttgart (DE)
(72) Erfinder: Steinberg, Klemens, 71665 Vaihingen/Enz-Enzweihingen (DE); Schnell, Matthias, 73614 Schorndorf (DE); Faltin, Christian, 70825 Korntal-Muenchingen (DE); Fischer, Daniel, 70565 Stuttgart (DE); Bosio, Marco, 70469 Stuttgart (DE)

(57) **Zusammenfassung**

Die Erfindung betrifft ein Durchflussbegrenzungsventil (10) für einen Druckregler (100) eines Wasserstoffsystems, umfassend einen Ventilkolben (20), der zwischen einer offenen (I) und einer geschlossenen (II) Position beweglich ist, eine Mehrzahl von in dem Ventilkolben ausgebildeten Druckausgleichsöffnungen (31) sowie eine Mehrzahl von in dem Ventilkolben (20) ausgebildeten Durchlassöffnungen (30), die in der offenen Position (I) einen fluidischen Durchgang zwischen einem Eingang (E) und einem Ausgang (A) bilden, eine Steuerbohrung (40) im Ventilkolben (20) zur kontrollierten Strömung in der geschlossenen Position (II) des Ventilkolbens (20), und eine Ventilfeder (50), wobei die Durchlassöffnungen (30) als Langlöcher oder als kreisrunde Durchlassöffnungen (30) ausgebildet sind, wobei die kreisrunden Durchlassöffnungen (30) in einem von 90° abweichenden Auslasswinkel (a) zur Strömungsrichtung (S) angeordnet sind.

## Beschreibung

Die Erfindung betrifft ein Durchflussbegrenzungsventil für einen Druckregler eines Wasserstoffsystems sowie einen entsprechenden Druckregler.

Die Nutzung von Wasserstoff als Energieträger gewinnt insbesondere im Bereich der Mobilität zunehmend an Bedeutung. Sowohl Brennstoffzellensysteme als auch Wasserstoffverbrennungsmotoren benötigen eine zuverlässige und präzise Druckregelung, um den aus Hochdrucktanks gespeicherten Wasserstoff mit einem kontrollierten und konstanten Massenstrom dem jeweiligen Verbraucher zuzuführen. Hierbei kommen Druckregelventile zum Einsatz, die den hohen Speicherdruck von bis zu 875 bar auf einen für die Verbraucher geeigneten Betriebsdruck reduzieren.

Ein Problem besteht darin, dass konventionelle Durchflussbegrenzungsventile bei sinkendem Tankdruck nicht mehr ausreichend Massenstrom bereitstellen können, was die nutzbare Kapazität des Wasserstofftanks einschränkt. Darüber hinaus verursachen Druckverluste und Turbulenzen im Strömungspfad Ineffizienzen, die sich insbesondere bei mechanischen oder elektromechanischen Druckminderern negativ auf die Leistung der nachgeschalteten Systeme auswirken. Um eine effiziente Entleerung des Wasserstofftanks zu ermöglichen, ist daher eine optimierte Strömungsführung innerhalb des Ventilkolbens des Durchflussbegrenzungsventils erforderlich, die den Massenstrom auch bei niedrigen Drücken maximiert und gleichzeitig Druckverluste reduziert.

Die US-Patentanmeldung US 2023/0163327 A1 beschreibt ein Druckregelventil für Wasserstoffsysteme mit einem Strömungsverschluss, der über einen internen Durchgang mit Einlass- und Durchlassöffnungen verfügt. Die Anmeldung offenbart eine radiale Anordnung der Durchlassöffnungen, um den Strömungswiderstand zu reduzieren, wobei jedoch diese Ausbildung nachteilig für den Massenstrom bei niedrigem Druck ist.

Gemäß einem ersten Aspekt betrifft die vorliegende Erfindung ein Durchflussbegrenzungsventil für einen Druckregler für ein Wasserstoffsystem, umfassend einen Ventilkolben, der zwischen einer offenen und einer geschlossenen Position beweglich ist, eine Mehrzahl von in dem Ventilkolben ausgebildeten Druckausgleichsöffnungen sowie eine Mehrzahl von in dem Ventilkolben ausgebildeten Durchlassöffnungen, die in der offenen Position einen fluidischen Durchgang zwischen einem Eingang und einem Ausgang bilden, eine Steuerbohrung im Ventilkolben zur kontrollierten Strömung in der geschlossenen Position des Ventilkolbens, und eine Ventilfeder, wobei die Durchlassöffnungen als Langlöcher oder als kreisrunde Durchlassöffnungen ausgebildet sind, wobei die kreisrunden Durchlassöffnungen in einem von 90° abweichenden Auslasswinkel zur Strömungsrichtung angeordnet sind.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Durchflussbegrenzungsventil beschrieben sind, selbstverständlich auch im Zusammenhang mit dem erfindungsgemäßen Druckregler und jeweils umgekehrt, sodass bezüglich der Offenbarung zu den einzelnen Erfindungsaspekten stets wechselseitig Bezug genommen wird bzw. werden kann.

Das erfindungsgemäße Durchflussbegrenzungsventil, Excess Flow Valve (EFV) bezeichnet, ist für den Einsatz in Wasserstoffsystemen konzipiert. Es dient der Regulierung des Wasserstoffflusses vom Hochdruckspeicher zum Verbraucher, wie beispielsweise einer Brennstoffzelle oder einem Wasserstoffverbrennungsmotor. Dabei gewährleistet es einen sicheren und effizienten Betrieb, indem es den maximalen Massenstrom begrenzt:
Ein Bauteil des Durchflussbegrenzungsventils ist der Ventilkolben, der zwischen einer offenen und einer geschlossenen Position beweglich ist. In der offenen Position ermöglicht der Ventilkolben den Durchfluss des Wasserstoffs vom Hochdruckeingang zum Niederdruckausgang. Im Falle einer plötzlichen Änderung des Massenstroms oder des Drucks übersteigt die resultierende Kraft die Haltekraft der Ventilfeder, wodurch der Ventilkolben in die geschlossene Position bewegt wird. In dieser Position wird der Massenstrom erheblich reduziert, um im Fehlerfall eine vollständige Entleerung des Tanks in die Umgebung zu verhindern. Im Rahmen der vorliegenden Erfindung ist der Ventilkolben vorzugsweise als ein Körper mit einer in Strömungsrichtung länglichen Erstreckung ausgebildet, sodass er eine definierte Führung innerhalb des Durchflussbegrenzungsventils ermöglicht. Der Ventilkolben weist eine Mehrzahl von in dem Ventilkolben ausgebildeten Druckausgleichöffnungen für einen Druckausgleich auf.

Ein weiteres Merkmal des Ventilkolbens sind die Durchlassöffnungen, die als Langlöcher oder als kreisrunde Durchlassöffnungen ausgeführt sind. Diese Öffnungen bilden in der offenen Position einen fluidischen Durchgang für den Wasserstoff. Die Langlöcher sind in Strömungsrichtung des Fluids versetzt zu den (ebenfalls als Langlöcher ausgeführten) Druckausgleichsöffnungen angeordnet, was bedeutet, dass sie nicht auf derselben axialen Ebene liegen, sondern entlang der Strömungsrichtung gestaffelt sind. Dies sorgt für mechanische Stabilität des Kolbens. Alternativ dazu sind die kreisrunden Durchlassöffnungen in einem von 90° abweichenden Auslasswinkel zur Strömungsrichtung positioniert, was bedeutet, dass sie als Schrägbohrungen ausgeführt sind. Diese schräge Anordnung erleichtert den Übergang des Wasserstoffs vom Ventilkolben zum Niederdruckausgang und trägt zu einem verbesserten Massenstrom bei.

Im Rahmen der vorliegenden Erfindung wird unter kreisrunden Durchlassöffnungen verstanden, dass diese sowohl exakt kreisrunde Durchlassöffnungen als auch geometrisch abweichende Durchlassöffnungen umfassen, die beispielsweise einen sich weitenden Querschnitt aufweisen oder durch eine konische oder elliptische Form modifiziert sind, sofern ihre grundlegende Funktion der Strömungsführung erhalten bleibt. Im Rahmen der Erfindung werden weiterhin kreisrunde Durchlassöffnungen als Bohrungen oder Schrägbohrungen verstanden, wobei diese in einem von 90° abweichenden Winkel zur Strömungsrichtung ausgebildet sein können. Im Rahmen der Erfindung bedeutet "in Strömungsrichtung" eine Anordnung entlang einer Mittelachse, die die Hauptströmungsrichtung des Fluids durch das Druckregelventil definiert.

Zusätzlich verfügt der Ventilkolben über eine Steuerbohrung, die im geschlossenen Zustand des Ventils eine kontrollierte, geringe Strömung ermöglicht. Diese Bohrung ist so dimensioniert, dass sie einen minimalen Massenstrom zulässt, der einen Druckausgleich zwischen den beiden Seiten des Ventils ermöglicht. Dieser Druckausgleich führt dazu, dass die Kräfte auf den Ventilkolben wieder ins Gleichgewicht kommen, wodurch die Ventilfeder den Kolben zurück in die offene Position bewegen kann. Somit wird ein selbstständiges Wiederöffnen des Ventils nach einer Schließung gewährleistet. Die Steuerbohrung ist vorzugsweise an einem Ende bzw. einer Spitze des Ventilkolbens angeordnet, die eine kontrollierte Strömung im geschlossenen Zustand des Ventils ermöglicht.

Die Bewegung des Ventilkolbens wird vorzugsweise durch eine Ventilfeder gesteuert, die ihn unter normalen Betriebsbedingungen in der offenen Position hält. Bei einer plötzlichen Druckänderung oder einer unkontrollierten Erhöhung des Massenstroms übersteigt die resultierende Druck-Kraft die Haltekraft der Ventilfeder, wodurch der Ventilkolben in die geschlossene Position bewegt wird und das Durchflussbegrenzungsventil den Massenstrom begrenzt. Durch die Steuerbohrung erfolgt nach einem Druckausgleich eine selbsttätige Wiederöffnung des Ventils. Die Ventilfeder umschließt den Ventilkolben vorzugsweise vollständig oder zumindest abschnittsweise und ist so angeordnet, dass sie den Ventilkolben in der offenen Position hält, solange die Massenstromgrenze nicht überschritten wird.

Die spezifische Gestaltung der Durchlassöffnungen, insbesondere die schräge Positionierung der kreisrunden Durchlassöffnungen, trägt dazu bei, die Druckverluste zu reduzieren und damit den möglichen Massenstrom auch bei niedrigen Tankdrücken zu erhöhen. Dies ermöglicht eine effizientere Entleerung des Wasserstofftanks und stellt sicher, dass der Verbraucher auch bei abnehmendem Tankdruck mit ausreichendem Wasserstoff versorgt wird.

Im Rahmen der Erfindung kann es von Vorteil sein, dass zumindest eine definierte Anzahl von Druckausgleichsöffnungen als Langlöcher in einem ersten Abschnitt des Ventilkolbens ausgebildet sind und eine definierte Anzahl an Durchlassöffnungen in einem zweiten Abschnitt des Ventilkolbens ausgebildet sind, wobei der zweite Abschnitt in Strömungsrichtung nach dem ersten Abschnitt angeordnet ist. Dabei ist der erste Abschnitt stromaufwärts, also näher am Hochdruckeingang positioniert, während der zweite Abschnitt stromabwärts in Strömungsrichtung nach dem ersten Abschnitt angeordnet ist.

Die Druckausgleichsöffnungen im ersten Abschnitt des Ventilkolbens sind als Langlöcher ausgebildet. Die Durchlassöffnungen im zweiten Abschnitt des Ventilkolbens sind so ausgelegt, dass sie einen Massenstrom mit definiertem Druckverlust von Innen nach Außen führen. Diese Öffnungen können erfindungsgemäß als Langlöcher oder als Schrägbohrungen mit einem von 90° abweichenden Auslasswinkel zur Strömungsrichtung ausgestaltet sein.

Im Rahmen der Erfindung ist es denkbar, dass in dem ersten Abschnitt die Druckausgleichsöffnungen ausschließlich als Langlöcher ausgebildet und in dem zweiten Abschnitt die Durchlassöffnungen als kreisrunde Durchlassöffnungen oder als Langlöcher ausgebildet sind, wobei zumindest die Langlöcher in dem zweiten Abschnitt in Umfangsrichtung relativ zu den Langlöchern des ersten Abschnitts versetzt angeordnet sind. Das Druckregelventil weist somit eine verbesserte Anordnung der Durchlassöffnungen im Ventilkolben auf. Der Ventilkolben ist in einen ersten Abschnitt und einen zweiten Abschnitt unterteilt, die in Strömungsrichtung des Fluids aufeinanderfolgend angeordnet sind. In dem ersten Abschnitt sind die Druckausgleichsöffnungen ausschließlich als Langlöcher ausgebildet.

In dem zweiten Abschnitt des Ventilkolbens sind die Durchlassöffnungen entweder als kreisrunde Durchlassöffnungen (Schrägbohrungen) oder als Langlöcher ausgebildet, die eine Druckreduzierung realisieren. Die Langlöcher in diesem zweiten Abschnitt sind bevorzugt in Umfangsrichtung relativ zu den Langlöchern des ersten Abschnitts versetzt angeordnet, um mechanische Stabilität zu gewährleisten.

Es kann im Rahmen der Erfindung vorgesehen sein, dass die kreisrunden Durchlassöffnungen einen Auslasswinkel zwischen 40° und 50° aufweisen. Dieser schräge Auslasswinkel bewirkt, dass der austretende Wasserstoff nicht senkrecht zur Strömungsrichtung (also zur Mittelachse) aus dem Ventilkolben austritt, sondern mit einer definierten Neigung in den Strömungspfad übergeht. Durch diese Anordnung werden Strömungsabrisse reduziert, sodass sich die Strömung harmonisch in den nachgeschalteten Kanal einfügt. Eine solche Gestaltung trägt dazu bei, Turbulenzen zu verringern und den Druckverlust entlang des Strömungspfads zu minimieren.

Je nach Anforderungen des Systems, kann der Durchmesser der kreisrunden Durchlassöffnungen unterschiedlich ausgeführt werden. Diese Variation der Bohrungsdurchmesser ermöglicht eine gezielte Steuerung des Massenstroms. Größere Bohrungsdurchmesser bieten einen höheren Strömungsquerschnitt, wodurch der Durchflusswiderstand reduziert und der Massenstrom erhöht wird. Kleinere Bohrungsdurchmesser hingegen sorgen für eine präzisere Regulierung der Strömung und ermöglichen eine feinere Abstufung der Auslöseschwelle des Massenstroms.

Es ist ferner denkbar, dass eine Einstellschraube vorgesehen ist, wobei der Ventilkolben zumindest abschnittsweise in der Einstellschraube angeordnet ist und die Einstellschraube eine Kammer aufweist, durch die das Fluid leitbar ist, insbesondere, dass eine Kontur der Kammer einen Hinterschnitt aufweist. Das Druckregelventil umfasst dabei eine Einstellschraube, die in funktionaler Verbindung mit dem Ventilkolben steht und insbesondere eine präzise Anpassung der Ventilfeder- bzw. Federvorspannung ermöglicht. Der Ventilkolben ist zumindest abschnittsweise in der Einstellschraube angeordnet, wodurch eine definierte mechanische Kopplung zwischen beiden Komponenten hergestellt wird. Die Einstellschraube ist so gestaltet, dass sie mit dem Ventilkolben oder dem Gehäuse des Einlassblocks verschraubt werden kann. Durch das Verdrehen der Einstellschraube wird die Position der Ventilfeder beeinflusst, wodurch sich die Vorspannung und damit das Schaltverhalten des Ventils gezielt anpassen lassen. Im Bereich des zweiten Abschnitts des Ventilkolbens kann die Einstellschraube einen vergrößerten Durchmesser aufweisen, wodurch eine Kammer oder ein Hohlraum gebildet wird. Dieser Hohlraum ist in Strömungsrichtung des Fluids angeordnet und dient als zusätzliche Expansionszone für das aus dem Ventilkolben austretende Fluid. Die Kontur der Kammer oder des Hohlraums weist vorzugsweise einen Hinterschnitt auf. Dieser Hinterschnitt ist als schräg verlaufende Kontur ausgebildet, wodurch sich der vergrößerte Durchmesser der Einstellschraube entlang einer in Strömungsrichtung orientierten Schräge verjüngt. Die Kammer oder der Hohlraum, insbesondere die geometrische Gestaltung mit einem Hinterschnitt, weisen dabei mehrere Funktionen auf. Dabei wird durch die gebildete Kammer oder den Hohlraum eine größere durchströmte Fläche bereitgestellt, wodurch die Strömungsgeschwindigkeit verringert wird und somit ein definierter Druckverlust geringer ausfällt. Darüber hinaus führt eine Umlenkung des Fluids mit dem durch die Kammer gebildeten vergrößerten Radius zu einem geringeren Druckverlust.

Auch ist es denkbar, dass eine Vielzahl an kreisrunden Durchlassöffnungen (Schrägbohrungen), vorgesehen sind. Diese Durchlassöffnungen sind über den Umfang des Ventilkolbens verteilt und so angeordnet, dass sie eine gleichmäßige Strömungsverteilung innerhalb des Ventils gewährleisten. Die Schrägstellung der Durchlassöffnungen bewirkt, dass die Strömung innerhalb des Ventilkolbens in einem definierten Winkel zum Strömungspfad abgelenkt wird, wodurch Druckverluste reduziert und der Übergang des Fluids/Wasserstoffs aus dem Hochdruckbereich in den Niederdruckbereich optimiert wird.

Eine höhere Anzahl von Durchlassöffnungen-trägt dazu bei, eine gleichmäßigere Druckverteilung innerhalb des Ventils zu gewährleisten und ungleichmäßige Strömungsprofile zu vermeiden.

Die kreisrunden Durchlassöffnungen sind vorzugsweise gleichverteilt über den Umfang zueinander angeordnet. Diese Anordnung optimiert die Strömung, indem sie eine gleichmäßige Druckreduzierung und eine kontrollierte Strömungsverteilung ermöglicht, während gleichzeitig eine ausreichende mechanische Stabilität des Ventilkolbens sichergestellt wird.

Im Rahmen der Erfindung ist es optional möglich, dass die kreisrunden Durchlassöffnungen einen Durchmesser zwischen 1mm und 2mm, bevorzugt zwischen 1,2mm und 1,8mm, besonders bevorzugt zwischen 1,4mm und 1,6mm aufweisen. Die genaue Dimensionierung der Schrägbohrungen beeinflusst die Strömungsdynamik im Ventil. Kleinere Durchmesser führen zu einer höheren Strömungsgeschwindigkeit, wodurch größere Druckverluste entstehen. Größere Durchmesser reduzieren die Strömungsgeschwindigkeit und sorgen für eine sanftere Expansion des Fluids, wodurch Druckverluste minimiert werden. Die bevorzugten Durchmesser von 1,4 mm bis 1,6 mm stellen einen optimalen Kompromiss zwischen diesen beiden Effekten dar und ermöglichen eine typischerweise geforderte Auslöseschwelle des Durchflussbegrenzungsventils.

Ferner kann es im Rahmen der Erfindung vorgesehen sein, dass in dem ersten Abschnitt drei Druckausgleichöffnungen und in dem zweiten Abschnitt drei Durchlassöffnungen jeweils als Langlöcher ausgebildet sind. Diese Konfiguration ist mechanisch ausreichend stabil und ermöglicht gleichzeitig den optimierten Massenstrom (mit definiertem Druckverlust) von innen nach außen zu führen.

Die Langlöcher in den beiden Abschnitten können in umfangsversetzter Anordnung zueinander positioniert sein, um die mechanische Stabilität des Ventilkolbens zu gewährleisten

Gemäß einem zweiten Aspekt betrifft die vorliegende Erfindung ferner einen Druckregler für ein Wasserstoffsystem, mit einem Einlassblock, einem Hauptgehäuse, einem Auslassblock und mit zumindest einem erfindungsgemäßen Durchflussbegrenzungsventil.

Damit ergeben sich in Bezug auf einen erfindungsgemäßen Druckregler die gleichen Vorteile, wie sie bereits in Bezug auf ein erfindungsgemäßes Durchflussbegrenzungsventil beschrieben worden sind.

Der Einlassblock bildet die Schnittstelle zum Hochdruckbereich des Wasserstoffsystems und ist vorzugsweise so ausgelegt, dass er Drücke im Bereich bis 875 bar aufnimmt. Er ist mit dem Hochdruckwasserstofftank verbunden und leitet das Medium in das Hauptgehäuse. Der Auslassblock stellt die Verbindung zum Niederdruckbereich des Systems her und leitet den Druck auf den Verbraucher, beispielsweise eine Brennstoffzelle oder einen Wasserstoffverbrennungsmotor, weiter. Durch die konstruktive Anordnung des Durchflussbegrenzungsventil innerhalb des Druckreglers wird sichergestellt, dass auch bei niedrigen Tankdrücken ein ausreichender Massenstrom aufrechterhalten bleibt. Dies optimiert die Entleerung des Wasserstofftanks und trägt zur Effizienzsteigerung des gesamten Systems bei.

Die Integration des erfindungsgemäßen Durchflussbegrenzungsventils innerhalb des Druckreglers begrenzt den maximal möglichen Massenstrom und verhindert so im Fehlerfall eine komplette Entleerung des Tanks.

In Bezug auf die vorliegende Erfindung ist es vorstellbar, dass das Durchflussbegrenzungsventil in dem Einlassblock angeordnet ist. Diese Anordnung gewährleistet, dass die Massenstrombegrenzung stromauf der eigentlichen Druckregelung erfolgt und somit der geregelte Druck nicht durch das Durchflussbegrenzungsventil beeinflusst wird.

Der Einlassblock ist die erste Komponente des Druckreglers, die mit dem Hochdruckwasserstofftank verbunden ist und Drücke im Bereich bis 875 bar aufnehmen kann.

Das Durchflussbegrenzungsventil ist innerhalb des Einlassblocks so ausgelegt, dass es mit den bereits beschriebenen Langlöchern oder kreisrunden Durchlassöffnungen eine strömungsoptimierte Durchleitung ermöglicht; sodass auch bei niedrigen Tankdrücken ein ausreichender Massenstrom aufrechterhalten wird.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen jeweils schematisch:
- Figur 1: eine erste mögliche Ausführungsform eines erfindungsgemäßen Durchflussbegrenzungsventil,
- Figur 2: eine zweite mögliche Ausführungsform eines erfindungsgemäßen Durchflussbegrenzungsventil s und
- Figur 3: eine mögliche Ausführungsform eines erfindungsgemäßen Druckreglers mit einem erfindungsgemäßen Durchflussbegrenzungsventil.

In den Figuren werden für die gleichen technischen Merkmale, auch von unterschiedlichen Ausführungsbeispielen, die identischen Bezugszeichen verwendet.

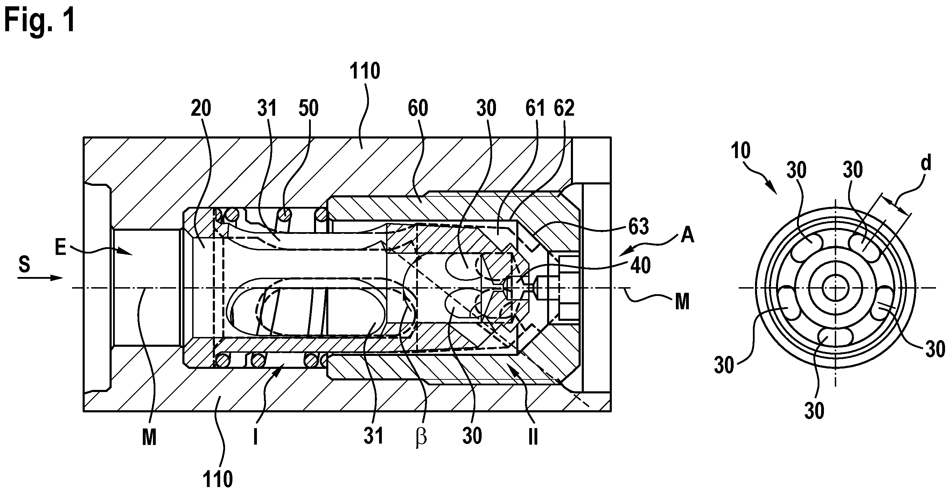

Fig. 1 zeigt schematisch eine Schnittansicht eines Durchflussbegrenzungsventil 10, das zur Massenstrombegrenzung eines unter Hochdruck gespeicherten Fluids, insbesondere Wasserstoffs, dient. Das dargestellte Ausführungsbeispiel umfasst einen länglich erstreckten Ventilkolben 20, der entlang der Strömungsrichtung S beweglich gelagert ist und zwischen einer offenen Position I (durchgezogen dargestellt) und einer geschlossenen Position II (gestrichelt dargestellt) wechselwirken kann. Die offene Position I ist in durchgehender Darstellung gezeigt, während die geschlossene Position II gestrichelt eingezeichnet ist, um die Bewegung des Ventilkolbens 20 innerhalb des Durchflussbegrenzungsventil 10 zu verdeutlichen.

Der Ventilkolben 20 weist zwei funktionale Abschnitte auf, einen ersten Abschnitt 21 und einen zweiten Abschnitt 22. Im ersten Abschnitt 21 sind mehrere als Langlöcher ausgebildete Druckausgleichöffnungen 31 angeordnet. Diese Langlöcher sind so ausgeführt, dass sie in Strömungsrichtung S versetzt zueinander positioniert sind, wodurch eine gleichmäßige Strömungsverteilung erreicht wird. Die Langlöcher ermöglichen einen Druckausgleich des Fluids inner- und außerhalb des Ventilkolbens 20.

Im zweiten Abschnitt 22 sind kreisrunde Durchlassöffnungen 30 vorgesehen, die als Schrägbohrungen mit einem Auslasswinkel α in Bezug auf die Strömungsrichtung S ausgebildet sind. Diese Anordnung bewirkt eine gezielte Umlenkung des Fluids in Richtung des Ausgangs A, wodurch eine sanfte und verlustarme Druckreduzierung erreicht wird. Die kreisrunden Durchlassöffnungen 30 können mit einem Auslasswinkel α zwischen 40° und 50° zur Strömungsrichtung S ausgebildet sein Der schräge Auslasswinkel α sorgt dafür, dass der austretende Wasserstoff nicht senkrecht zur Strömungsrichtung S aus dem Ventilkolben 20 austritt, sondern mit einer definierten Neigung in den Strömungspfad übergeht. Dadurch werden Strömungsabrisse reduziert, sodass sich die Strömung harmonisch in den nachgeschalteten Kanal 70 einfügt. Diese Gestaltung trägt dazu bei, Turbulenzen zu verringern und den Druckverlust entlang des Strömungspfads zu minimieren.

Das Durchflussbegrenzungsventil 10 umfasst eine Einstellschraube 60, die in funktionaler Verbindung mit dem Ventilkolben 20 steht und insbesondere eine präzise Anpassung der Federvorspannung ermöglicht. Der Ventilkolben 20 ist zumindest abschnittsweise in der Einstellschraube 60 angeordnet, wodurch eine definierte mechanische Kopplung zwischen beiden Komponenten hergestellt wird. Die Einstellschraube 60 ist so gestaltet, dass sie mit dem Ventilkolben 20 oder dem Gehäuse 80 des Einlassblocks 90 verschraubt werden kann. Durch das Verdrehen der Einstellschraube 60 wird die Position der Ventilfeder 50 beeinflusst, wodurch sich die Vorspannung und damit das Schaltverhalten des Ventils gezielt anpassen lassen. Im Bereich des zweiten Abschnitts 22 des Ventilkolbens 20 kann die Einstellschraube 60 einen vergrößerten Durchmesser aufweisen, wodurch eine Kammer 61 gebildet wird. Diese Kammer 61 ist in Strömungsrichtung S des Fluids angeordnet und dient als zusätzliche Expansionszone für das aus dem Ventilkolben 20 austretende Fluid. Durch die definierte Volumenerweiterung innerhalb der Kammer 61 kann sich das Fluid sanfter ausbreiten, wodurch Druckverluste minimiert und Strömungsturbulenzen reduziert werden.

An der Spitze/vorderem Ende des Ventilkolbens 20 ist eine Steuerbohrung 40 angeordnet, die einen definierten Massenstrom im geschlossenen Zustand des Ventils 10 ermöglicht. Diese Steuerbohrung 40 dient dazu, einen Druckausgleich zwischen der Hochdruck- und der Niederdruckseite herzustellen, sodass der Ventilkolben 20 nach einer Schließung wieder in die offene Position I zurückkehren kann.

Die Bewegung des Ventilkolbens 20 wird durch eine Ventilfeder 50 gesteuert, die ihn unter normalen Betriebsbedingungen in der offenen Position I hält. Bei einer plötzlichen Druckänderung oder einer unkontrollierten Erhöhung des Massenstroms übersteigt die resultierende Druck-Kraft die Haltekraft der Ventilfeder 50, wodurch der Ventilkolben 20 in die geschlossene Position II bewegt wird und das Druckregelventil 10 den Massenstrom begrenzt. Durch die Steuerbohrung 40 erfolgt nach einem Druckausgleich eine selbsttätige Wiederöffnung des Ventils.

Der Eingang E des Durchflussbegrenzungsventil 10 ist mit einem Hochdruckbereich verbunden, während der Ausgang A das Fluid an die nachgeschaltete Druckregelung im Hauptgehäuse weiterleitet. Die spezifische Ausbildung der Durchlassöffnungen 30 mit dem definierten Auslasswinkel α trägt dazu bei, die Strömungsführung innerhalb des Durchflussbegrenzungsventil 10 zu optimieren und unerwünschte Turbulenzen zu reduzieren.

Darüber hinaus ist in Fig. 1 ein Ausschnitt des Druckregelventils 10 gezeigt, in dem die Anordnung der kreisrunden Durchlassöffnungen 30 in Umfangsrichtung gezeigt ist. Die Durchlassöffnungen 30 weisen jeweils einen Durchmesser d auf, der bevorzugt zwischen 1mm und 2mm, bevorzugt zwischen 1,2mm und 1,8mm, besonders bevorzugt zwischen 1,4mm und 1,6mm liegt. Die Durchlassöffnungen 30 sind gleichverteilt über den Umfang angeordnet.

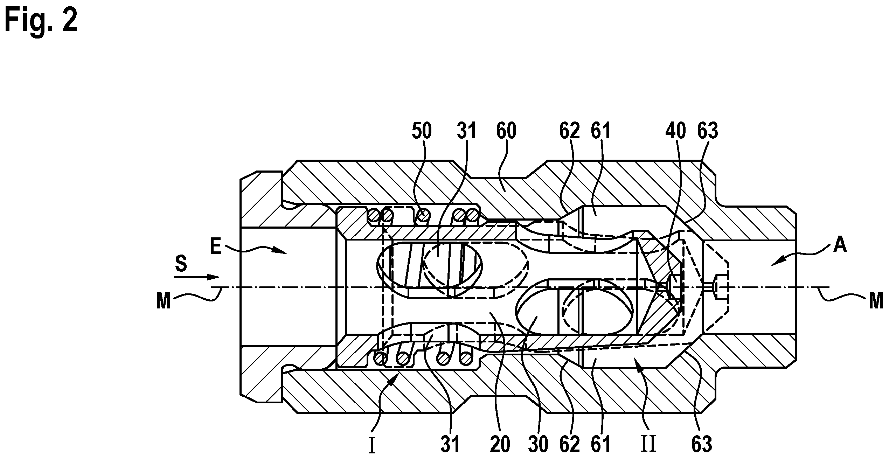

Fig. 2 zeigt eine zweite Ausführungsform des Durchflussbegrenzungsventil 10, die sich unter anderem hinsichtlich der Ausbildung der Durchlassöffnungen 30 von der in Figur 1 dargestellten Ausführungsform unterscheidet. Die in Figur 2 dargestellte Ausführungsform weist im ersten Abschnitt 21 Druckausgleichöffnungen 31 und im zweiten Abschnitt 22 Durchlassöffnungen 30 auf, die jeweils als Langlöcher ausgebildet sind. Diese Langlöcher sind entsprechend der Erfindung bevorzugt versetzt zueinander angeordnet, um die mechanische Stabilität des Kolbens nicht zu beeinträchtigen.

Das Durchflussbegrenzungsventil 10 umfasst eine Einstellschraube 60, die in funktionaler Verbindung mit dem Ventilkolben 20 steht und insbesondere eine Anpassung der Federvorspannung ermöglicht. Der Ventilkolben 20 ist zumindest abschnittsweise in der Einstellschraube 60 angeordnet, wodurch eine definierte mechanische Kopplung zwischen beiden Komponenten hergestellt wird. Die Einstellschraube 60 ist so gestaltet, dass sie mit dem Ventilkolben 20 oder dem Gehäuse 80 des Einlassblocks 110 verschraubt werden kann. Durch das Verdrehen der Einstellschraube 60 wird die Position der Ventilfeder 50 beeinflusst, wodurch sich die Vorspannung und damit das Schaltverhalten des Ventils gezielt anpassen lassen. Im Bereich des zweiten Abschnitts 22 des Ventilkolbens 20 kann die Einstellschraube 60 einen vergrößerten Durchmesser aufweisen, wodurch eine Kammer 61 gebildet wird. Diese Kammer 61 ist in Strömungsrichtung S des Fluids angeordnet und dient als zusätzliche Expansionszone für das aus dem Ventilkolben 20 austretende Fluid. Durch die definierte Volumenerweiterung innerhalb der Kammer 61 kann sich das Fluid sanfter ausbreiten, wodurch Druckverluste minimiert und Strömungsturbulenzen reduziert werden.

Die Kontur 62 der Kammer 61 weist einen Hinterschnitt 63 auf, der als schräg verlaufende Kontur 62 ausgebildet ist, wodurch sich der vergrößerte Durchmesser entlang einer in Strömungsrichtung S orientierten Schräge verjüngt. Diese Geometrie sorgt für eine gezielte Führung der Strömung und ermöglicht eine sanfte Übergangszone zwischen der Expansionskammer 61 und dem nachgeschalteten Strömungspfad. Die kontinuierliche Verjüngung des Durchmessers entlang der Strömungsachse bewirkt eine homogenere Druckabsenkung und verhindert abrupte Umlenkungen, die zu erhöhten Druckverlusten führen könnten. Durch die geometrische Optimierung der Durchlassöffnungen 30 in Form von Langlöchern in definierter Anordnung sowie in Kombination mit dem Hinterschnitt 63 innerhalb der Kammer 61 wird der Strömungsquerschnitt erweitert, wodurch ein höherer Massenstrom auch bei niedrigen Drücken gewährleistet wird.

An der Spitze des Ventilkolbens 20 ist, analog zur ersten Ausführungsform, die Steuerbohrung 40 vorgesehen. Diese Steuerbohrung 40 ermöglicht im geschlossenen Zustand des Ventils 10 einen definierten Restmassenstrom, sodass ein Druckausgleich zwischen dem Eingang E und dem Ausgang A hergestellt werden kann. Durch diesen Druckausgleich kann sich der Ventilkolben 20 nach einer Schließung wieder in die offene Position I bewegen.

Die Ventilfeder 50 hält den Ventilkolben 20 unter normalen Betriebsbedingungen in der offenen Position I. Sobald eine plötzliche Änderung des Massenstroms oder des Drucks auftritt, übersteigt die resultierende Kraft die Haltekraft der Ventilfeder 50, sodass sich der Ventilkolben 20 in die geschlossene Position II (gestrichelt dargestellt) bewegt und das Durchflussbegrenzungsventil 10 den Massenstrom begrenzt. Die Steuerbohrung 40 stellt sicher, dass sich das Ventil nach einem Druckausgleich selbstständig wieder öffnet.

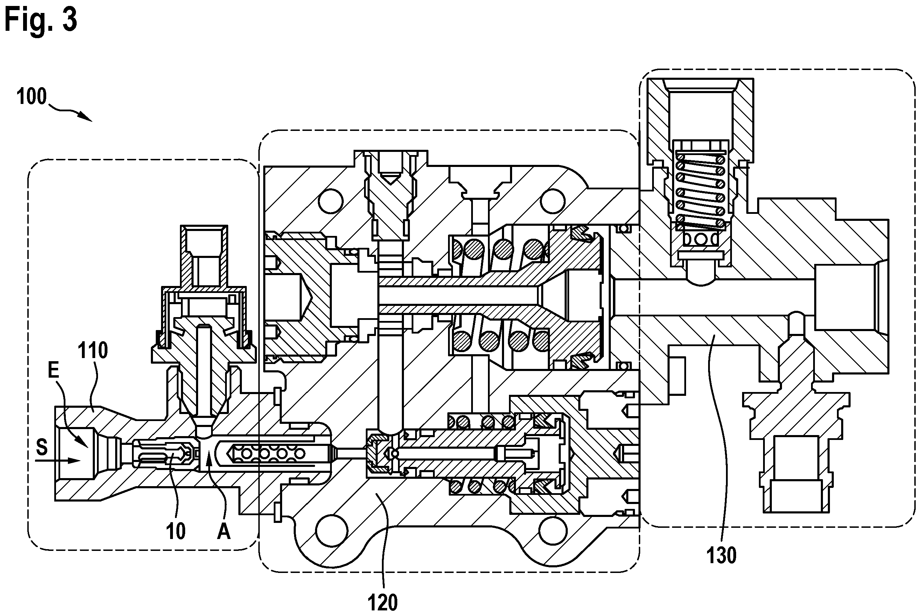

Fig. 3 zeigt einen erfindungsgemäßen Druckregler 100, der zur kontrollierten Druckreduzierung eines unter Hochdruck gespeicherten Fluids, insbesondere Wasserstoffs, dient. Der Druckregler 100 umfasst einen Einlassblock 110, ein Hauptgehäuse 120 und einen Auslassblock 130. Der Einlassblock 110 ist mit einer Hochdruckquelle verbunden und leitet das Fluid in das Hauptgehäuse 120, in dem mindestens ein Durchflussbegrenzungsventil 10 angeordnet ist. Das Durchflussbegrenzungsventil 10 ist ein Sicherheitsventil mit der Funktion, den maximalen Massenstrom (im Fehlerfall) zu begrenzen. Abschließend wird das Fluid über den Auslassblock 130 an den nachgeschalteten Verbraucher weitergeleitet. Durch die Anordnung des Durchflussbegrenzungsventil 10 innerhalb des Einlassblocks 110 kann eine stabile Versorgung des Verbrauchers mit einem definierten Arbeitsdruck gewährleistet werden.

## Patentansprüche

1. Durchflussbegrenzungsventil (10) für einen Druckregler (100) eines Wasserstoffsystems, umfassend einen Ventilkolben (20), der zwischen einer offenen (I) und einer geschlossenen (II) Position beweglich ist, eine Mehrzahl von in dem Ventilkolben ausgebildeten Druckausgleichsöffnungen (31) sowie eine Mehrzahl von in dem Ventilkolben (20) ausgebildeten Durchlassöffnungen (30), die in der offenen Position (I) einen fluidischen Durchgang zwischen einem Eingang (E) und einem Ausgang (A) bilden, eine Steuerbohrung (40) im Ventilkolben (20) zur kontrollierten Strömung in der geschlossenen Position (II) des Ventilkolbens (20), und eine Ventilfeder (50), **dadurch gekennzeichnet, dass** die Durchlassöffnungen (30) als Langlöcher oder als kreisrunde Durchlassöffnungen (30) ausgebildet sind wobei die kreisrunden Durchlassöffnungen (30) einen von 90° abweichenden Auslasswinkel (α) zur Strömungsrichtung (S) aufweisen.

2. Durchflussbegrenzungsventil (10) nach Anspruch 1,
**dadurch gekennzeichnet,**
**dass** zumindest eine definierte Anzahl von Druckausgleichsöffnungen (31) als Langlöcher in einem ersten Abschnitt (21) des Ventilkolbens (20) ausgebildet sind und eine definierte Anzahl an Durchlassöffnungen (30) in einem zweiten Abschnitt (22) des Ventilkolbens (20) ausgebildet sind, wobei der zweite Abschnitt (22) in Strömungsrichtung (S) nach dem ersten Abschnitt (21) angeordnet ist.

3. Durchflussbegrenzungsventil (10) nach Anspruch 2,
**dadurch gekennzeichnet,**
**dass** in dem ersten Abschnitt (21) die Druckausgleichsöffnungen (31) ausschließlich als Langlöcher ausgebildet und in dem zweiten Abschnitt (22) die Durchlassöffnungen (30) als kreisrunde Durchlassöffnungen (30) oder als Langlöcher ausgebildet sind, wobei zumindest die Langlöcher in dem zweiten Abschnitt (22) in Umfangsrichtung relativ zu den Langlöchern des ersten Abschnitts (21) versetzt angeordnet sind.

4. Durchflussbegrenzungsventil (10) nach einem der vorhergehenden Ansprüche,
**dadurch gekennzeichnet,**
**dass** die kreisrunden Durchlassöffnungen (30) einen Auslasswinkel (α) zwischen 40° und 50° aufweisen

5. Durchflussbegrenzungsventil (10) nach einem der vorhergehenden Ansprüche,
**dadurch gekennzeichnet,**
**dass** eine Einstellschraube (60) vorgesehen ist, wobei der Ventilkolben (20) zumindest abschnittsweise in der Einstellschraube (60) angeordnet ist und die Einstellschraube (60) eine Kammer (61) aufweist, durch die das Fluid leitbar ist, insbesondere, dass eine Kontur (62) der Kammer (61) einen Hinterschnitt (63) aufweist.

6. Durchflussbegrenzungsventil (10) nach einem der vorhergehenden Ansprüche,
**dadurch gekennzeichnet,**
**dass** eine Vielzahl an kreisrunden Durchlassöffnungen (30), vorgesehen sind, insbesondere, dass die kreisrunden Durchlassöffnungen (30) gleichverteilt über den Umfang des Ventilkolbens zueinander angeordnet sind.

7. Durchflussbegrenzungsventil (10) nach einem der vorhergehenden Ansprüche,
**dadurch gekennzeichnet,**
**dass** die kreisrunde Durchlassöffnungen (30) einen Durchmesser (d) zwischen 1mm und 2mm, bevorzugt zwischen 1,2mm und 1,8mm, besonders bevorzugt zwischen 1,4mm und 1,6mm, aufweisen.

8. Durchflussbegrenzungsventil (10) nach einem der vorhergehenden Ansprüche,
**dadurch gekennzeichnet,**
**dass** in dem ersten Abschnitt (21) drei Druckausgleichöffnungen (31) und in dem zweiten Abschnitt (22) drei Durchlassöffnungen jeweils als Langlöcher ausgebildet sind.

9. Druckregler (100) für ein Wasserstoffsystem, mit einem Einlassblock (110), einem Hauptgehäuse (120), einem Auslassblock (130) und mit zumindest einem Durchflussbegrenzungsventil (10) gemäß einem der vorhergehenden Ansprüche.

10. Druckregler (100) nach Anspruch 9,
**dadurch gekennzeichnet,**
**dass** das Durchflussbegrenzungsventil (10) in dem Einlassblock (110) angeordnet ist.
